# EUROPEAN PATENT APPLICATION

(11) **EP 4 808 030 A1**
(43) Date of publication of application: **16.09.2026**
(21) Application number: 23959928.5
(22) Date of filing: 30.11.2023
(51) Int. Cl.: H04L 5/00

(54) **METHOD AND APPARATUS FOR TRANSMITTING CONTROL FRAME**

(71) Applicant: Huawei Technologies Co., Ltd., Shenzhen, Guangdong 518129 (CN)
(72) Inventor: LI, Yun, Shenzhen, Guangdong 518129 (CN); WANG, Xinyuan, Shenzhen, Guangdong 518129 (CN); YANG, Bing, Shenzhen, Guangdong 518129 (CN); SHI, Xuan, Shenzhen, Guangdong 518129 (CN)
(74) Representative: Goddar, Heinz J.
(86) International application number: PCT/CN2023/135740
(87) International publication number: WO 2025/112017

(57) **Abstract**

This application provides a control frame transmission method and apparatus, relating to the communication field, to improve flexibility of control frame transmission and improve bandwidth utilization of data transmission. The method includes: sending a control frame send location message, where the control frame send location message includes control frame send location information, the control frame send location information indicates to send a control frame after sending a current logical block and then a first quantity of logical blocks, and the first quantity is a quantity of logical blocks that is indicated by the control frame send location information; and sending the control frame after sending the logical block that includes the control frame send location message and then the first quantity of logical blocks.

## Description

### TECHNICAL FIELD

This application relates to the communication field, and in particular, to a control frame transmission method and apparatus.

### BACKGROUND

With rapid development of communication technologies, service data is transmitted between interconnected devices over a link between the two devices. To ensure performance of the link, the devices at both ends implement link control by exchanging a control frame for link management.

However, it is difficult to balance flexibility of sending the control frame with accuracy of delimitation by a peer end.

### SUMMARY

A control frame transmission method and apparatus provided in this application resolves a problem of balancing flexibility of sending a control frame with accuracy of delimitation by a peer end, thereby improving flexibility of control frame transmission and improving accuracy of delimitation of the control frame by the peer end.

To achieve the foregoing objectives, the following technical solutions are used in embodiments of this application.

According to a first aspect, a control frame transmission method is provided, and the method may include: sending a control frame send location message, where the control frame send location message includes control frame send location information, the control frame send location information indicates to send a control frame after sending a current logical block and then a first quantity of logical blocks, and the first quantity is a quantity of logical blocks that is indicated by the control frame send location information; and sending the control frame after sending the logical block that includes the control frame send location message and then the first quantity of logical blocks.

According to the solution provided in this application, before the control frame is sent, a specific send location of the control frame may be indicated by the control frame send location message, so that a receive end can delimit the control frame without configuring a dedicated character header. This improves bandwidth utilization of data transmission. Even if the control frame is sent only when the control frame needs to be transmitted, accurate delimitation of the control frame can be ensured. This improves bandwidth utilization of data transmission and improves flexibility of control frame transmission.

In a possible implementation, the current logical block may be a logical block that includes the control frame send location message.

In another possible implementation, the control frame is transmitted over an independent lane, to ensure integrity of a code pattern of the control frame.

In another possible implementation, the control frame includes: a sequence frame used for clock locking in a lane training phase, or a logical layer training sequence 0.

In another possible implementation, the control frame includes: a sequence frame used for channel parameter optimization calculation in a lane training phase, or a logical layer training sequence 1.

In another possible implementation, the control frame includes: a sequence frame used for a receiver and a transmitter to acknowledge a synchronized state in a lane training phase, or a logical layer training sequence 2.

In another possible implementation, the control frame includes: a frame used to mark an end of lane data transmission, or a logical layer electrical idle frame.

In another possible implementation, the control frame includes: a frame used to mark a start location of a new logical block, or a logical layer data start frame.

In another possible implementation, the control frame includes: a frame used for delay detection, or a logical layer lane de-skew test frame.

In another possible implementation, the control frame includes: a frame used for waking up, or a logical layer electrical idle exit frame.

In another possible implementation, the control frame includes: a frame used for padding.

In another possible implementation, the code pattern of the control frame is fixed. In other words, content included in the control frame is fixed.

In another possible implementation, the control frame includes one or more of the following: a frame header or a payload.

The control frame is the sequence frame used for clock locking in a lane training phase, or the logical layer training sequence 0, and the control frame includes the payload.

Alternatively, the control frame is the sequence frame used for channel parameter optimization calculation in a lane training phase, or the logical layer training sequence 1, and the control frame includes the payload.

Alternatively, the control frame is the sequence frame used for a receiver and a transmitter to acknowledge a synchronized state in a lane training phase, or the logical layer training sequence 2, the control frame includes the frame header and the payload, and the frame header includes a frame type and a checksum field.

Alternatively, the control frame is the frame used to mark an end of lane data transmission, or the logical layer electrical idle frame, the control frame includes the frame header, and the frame header includes a frame type and a checksum field.

Alternatively, the control frame is the frame used to mark a start location of a new logical block, or the logical layer data start frame, the control frame includes the frame header, and the frame header includes a frame type and a checksum field.

Alternatively, the control frame is the frame used for delay detection, or the logical layer lane de-skew test frame, the control frame includes the frame header, and the frame header includes a frame type and a checksum field.

Alternatively, the control frame is the frame used for waking up, or the logical layer electrical idle exit frame, and the control frame includes the payload.

Alternatively, the control frame is the frame used for padding, the control frame includes the frame header and the payload, and the frame header includes a frame type and a checksum field.

In another possible implementation, the control frame is used to transfer link management and/or a training sequence.

According to a second aspect, another control frame transmission method is provided, and the method may include: receiving a logical block that includes a control frame send location message; unpacking and deblocking the logical block to obtain control frame send location information included in the control frame send location message, where the control frame send location information indicates to send a control frame after sending the current logical block and then a first quantity of logical blocks, and the first quantity is a quantity of logical blocks that is indicated by the control frame send location information; and obtaining, through parsing, the control frame after parsing the current logical block and then the first quantity of logical blocks.

It should be noted that the control frame transmission method provided in the second aspect is a method at a receive end corresponding to the data transmission method provided in the first aspect or any possible implementation. For specific implementation of the method, refer to the first aspect or any possible implementation of the first aspect. Details are not described herein again.

In another possible implementation, the control frame is transmitted over an independent lane, to ensure integrity of a code pattern of the control frame.

In another possible implementation, the control frame includes: a sequence frame used for clock locking in a lane training phase, or a logical layer training sequence 0.

In another possible implementation, the control frame includes: a sequence frame used for channel parameter optimization calculation in a lane training phase, or a logical layer training sequence 1.

In another possible implementation, the control frame includes: a sequence frame used for a receiver and a transmitter to acknowledge a synchronized state in a lane training phase, or a logical layer training sequence 2.

In another possible implementation, the control frame includes: a frame used to mark an end of lane data transmission, or a logical layer electrical idle frame.

In another possible implementation, the control frame includes: a frame used to mark a start location of a new logical block, or a logical layer data start frame.

In another possible implementation, the control frame includes: a frame used for delay detection, or a logical layer lane de-skew test frame.

In another possible implementation, the control frame includes: a frame used for waking up, or a logical layer electrical idle exit frame.

In another possible implementation, the control frame includes: a frame used for padding.

In another possible implementation, the code pattern of the control frame is fixed. In other words, content included in the control frame is fixed.

In another possible implementation, the control frame includes one or more of the following: a frame header or a payload.

The control frame is the sequence frame used for clock locking in a lane training phase, or the logical layer training sequence 0, and the control frame includes the payload.

Alternatively, the control frame is the sequence frame used for channel parameter optimization calculation in a lane training phase, or the logical layer training sequence 1, and the control frame includes the payload.

Alternatively, the control frame is the sequence frame used for a receiver and a transmitter to acknowledge a synchronized state in a lane training phase, or the logical layer training sequence 2, the control frame includes the frame header and the payload, and the frame header includes a frame type and a checksum field.

Alternatively, the control frame is the frame used to mark an end of lane data transmission, or the logical layer electrical idle frame, the control frame includes the frame header, and the frame header includes a frame type and a checksum field.

Alternatively, the control frame is the frame used to mark a start location of a new logical block, or the logical layer data start frame, the control frame includes the frame header, and the frame header includes a frame type and a checksum field.

Alternatively, the control frame is the frame used for delay detection, or the logical layer lane de-skew test frame, the control frame includes the frame header, and the frame header includes a frame type and a checksum field.

Alternatively, the control frame is the frame used for waking up, or the logical layer electrical idle exit frame, and the control frame includes the payload.

Alternatively, the control frame is the frame used for padding, the control frame includes the frame header and the payload, and the frame header includes a frame type and a checksum field.

In another possible implementation, the control frame is used to transfer link management and/or a training sequence.

According to a third aspect, a control frame transmission apparatus is provided, and the apparatus may include a determining unit and a sending unit.

The determining unit determines control frame send location information, where the control frame send location information indicates to send a control frame after sending a current logical block and then a first quantity of logical blocks, and the first quantity is a quantity of logical blocks that is indicated by the control frame send location information.

The sending unit is configured to: send a control frame send location message, where the control frame send location message includes the control frame send location information, and send the control frame after sending the logical block that includes the control frame send location message and then the first quantity of logical blocks.

According to the solution provided in this application, before the control frame is sent, a specific send location of the control frame may be indicated by the control frame send location message, so that a receive end can delimit the control frame without configuring a dedicated character header. This improves bandwidth utilization of data transmission. Even if the control frame is sent only when the control frame needs to be transmitted, accurate delimitation of the control frame can be ensured. This improves bandwidth utilization of data transmission and improves flexibility of control frame transmission.

In another possible implementation, the control frame is transmitted over an independent lane, to ensure integrity of a code pattern of the control frame.

In another possible implementation, the control frame includes: a sequence frame used for clock locking in a lane training phase, or a logical layer training sequence 0.

In another possible implementation, the control frame includes: a sequence frame used for channel parameter optimization calculation in a lane training phase, or a logical layer training sequence 1.

In another possible implementation, the control frame includes: a sequence frame used for a receiver and a transmitter to acknowledge a synchronized state in a lane training phase, or a logical layer training sequence 2.

In another possible implementation, the control frame includes: a frame used to mark an end of lane data transmission, or a logical layer electrical idle frame.

In another possible implementation, the control frame includes: a frame used to mark a start location of a new logical block, or a logical layer data start frame.

In another possible implementation, the control frame includes: a frame used for delay detection, or a logical layer lane de-skew test frame.

In another possible implementation, the control frame includes: a frame used for waking up, or a logical layer electrical idle exit frame.

In another possible implementation, the control frame includes: a frame used for padding.

In another possible implementation, the code pattern of the control frame is fixed. In other words, content included in the control frame is fixed.

In another possible implementation, the control frame includes one or more of the following: a frame header or a payload.

The control frame is the sequence frame used for clock locking in a lane training phase, or the logical layer training sequence 0, and the control frame includes the payload.

Alternatively, the control frame is the sequence frame used for channel parameter optimization calculation in a lane training phase, or the logical layer training sequence 1, and the control frame includes the payload.

Alternatively, the control frame is the sequence frame used for a receiver and a transmitter to acknowledge a synchronized state in a lane training phase, or the logical layer training sequence 2, the control frame includes the frame header and the payload, and the frame header includes a frame type and a checksum field.

Alternatively, the control frame is the frame used to mark an end of lane data transmission, or the logical layer electrical idle frame, the control frame includes the frame header, and the frame header includes a frame type and a checksum field.

Alternatively, the control frame is the frame used to mark a start location of a new logical block, or the logical layer data start frame, the control frame includes the frame header, and the frame header includes a frame type and a checksum field.

Alternatively, the control frame is the frame used for delay detection, or the logical layer lane de-skew test frame, the control frame includes the frame header, and the frame header includes a frame type and a checksum field.

Alternatively, the control frame is the frame used for waking up, or the logical layer electrical idle exit frame, and the control frame includes the payload.

Alternatively, the control frame is the frame used for padding, the control frame includes the frame header and the payload, and the frame header includes a frame type and a checksum field.

In another possible implementation, the control frame is used to transfer link management and/or a training sequence.

It should be noted that the control frame transmission apparatus provided in the third aspect is configured to implement the control frame transmission method provided in the first aspect or any possible implementation. For specific implementation of the apparatus, refer to the first aspect or any possible implementation of the first aspect. Details are not described herein again.

According to a fourth aspect, another control frame transmission apparatus is provided. The apparatus may include a receiving unit and a decapsulation unit.

The receiving unit is configured to receive a logical block that includes a control frame send location message.

The decapsulation unit is configured to: unpack and deblock the logical block, to obtain control frame send location information included in the control frame send location message, where the control frame send location information indicates to send a control frame after sending the current logical block and then a first quantity of logical blocks, and the first quantity is a quantity of logical blocks that is indicated by the control frame send location information; and obtain, through parsing, the control frame after parsing the current logical block and then the first quantity of logical blocks.

In another possible implementation, the control frame is transmitted over an independent lane, to ensure integrity of a code pattern of the control frame.

In another possible implementation, the control frame includes: a sequence frame used for clock locking in a lane training phase, or a logical layer training sequence 0.

In another possible implementation, the control frame includes: a sequence frame used for channel parameter optimization calculation in a lane training phase, or a logical layer training sequence 1.

In another possible implementation, the control frame includes: a sequence frame used for a receiver and a transmitter to acknowledge a synchronized state in a lane training phase, or a logical layer training sequence 2.

In another possible implementation, the control frame includes: a frame used to mark an end of lane data transmission, or a logical layer electrical idle frame.

In another possible implementation, the control frame includes: a frame used to mark a start location of a new logical block, or a logical layer data start frame.

In another possible implementation, the control frame includes: a frame used for delay detection, or a logical layer lane de-skew test frame.

In another possible implementation, the control frame includes: a frame used for waking up, or a logical layer electrical idle exit frame.

In another possible implementation, the control frame includes: a frame used for padding.

In another possible implementation, the code pattern of the control frame is fixed. In other words, content included in the control frame is fixed.

In another possible implementation, the control frame includes one or more of the following: a frame header or a payload.

The control frame is the sequence frame used for clock locking in a lane training phase, or the logical layer training sequence 0, and the control frame includes the payload.

Alternatively, the control frame is the sequence frame used for channel parameter optimization calculation in a lane training phase, or the logical layer training sequence 1, and the control frame includes the payload.

Alternatively, the control frame is the sequence frame used for a receiver and a transmitter to acknowledge a synchronized state in a lane training phase, or the logical layer training sequence 2, the control frame includes the frame header and the payload, and the frame header includes a frame type and a checksum field.

Alternatively, the control frame is the frame used to mark an end of lane data transmission, or the logical layer electrical idle frame, the control frame includes the frame header, and the frame header includes a frame type and a checksum field.

Alternatively, the control frame is the frame used to mark a start location of a new logical block, or the logical layer data start frame, the control frame includes the frame header, and the frame header includes a frame type and a checksum field.

Alternatively, the control frame is the frame used for delay detection, or the logical layer lane de-skew test frame, the control frame includes the frame header, and the frame header includes a frame type and a checksum field.

Alternatively, the control frame is the frame used for waking up, or the logical layer electrical idle exit frame, and the control frame includes the payload.

Alternatively, the control frame is the frame used for padding, the control frame includes the frame header and the payload, and the frame header includes a frame type and a checksum field.

In another possible implementation, the control frame is used to transfer link management and/or a training sequence.

It should be noted that the control frame transmission apparatus provided in the fourth aspect is configured to implement the control frame transmission method provided in the second aspect or any possible implementation. For specific implementation of the apparatus, refer to the first aspect or any possible implementation of the first aspect. Details are not described herein again.

According to a fifth aspect, a compute device is provided. The compute device includes a memory and at least one processor. The memory is configured to store a group of computer instructions. When the processor executes the group of computer instructions, operations of the method according to the first aspect, the second aspect, or any possible implementation are performed.

According to a sixth aspect, a data transmission system is provided. The data transmission system includes a data sending apparatus and/or a data receiving apparatus. The data sending apparatus is configured to perform the control frame transmission method according to the first aspect or any possible implementation of the first aspect, and the data receiving apparatus is configured to perform the control frame transmission method according to the second aspect or any possible implementation of the first aspect. Alternatively, the data sending apparatus includes the control frame transmission apparatus according to the third aspect or any possible implementation of the third aspect, and the data receiving apparatus includes the control frame transmission apparatus according to the fourth aspect or any possible implementation of the fourth aspect.

According to a seventh aspect, a chip is provided. The chip includes one or more interface circuits and one or more processors. The interface circuit is configured to: receive a signal from a memory of an electronic device, and send the received signal to the processor, where the signal includes computer instructions stored in the memory. When the processor executes the computer instructions, the electronic device is enabled to perform operation steps of the method according to the first aspect, the second aspect, or any possible implementation.

According to an eighth aspect, a computer-readable storage medium is provided. The computer-readable storage medium includes computer software instructions. When the computer software instructions are run in a computer, the computer is enabled to perform operations of the method according to the first aspect, the second aspect, or any possible implementation.

According to a ninth aspect, a computer program product is provided. When the computer program product is run in a computer, the computer is enabled to perform operation steps of the method according to the first aspect, the second aspect, or any possible implementation.

According to a tenth aspect, a chip is provided. The chip system includes a processor, and may further include a memory, configured to implement a function in the foregoing method. The chip system may include a chip, or may include a chip and another discrete component.

The solutions provided in the third aspect to the tenth aspect are used to implement the method provided in the first aspect or the second aspect, and therefore can achieve same beneficial effect as the first aspect or the second aspect. Details are not described herein again.

It should be noted that all possible implementations of any one of the foregoing aspects may be combined on a premise that there is no conflict between the solutions.

### BRIEF DESCRIPTION OF DRAWINGS

FIG. 1 is a diagram of an architecture of a multimedia data transmission system according to an embodiment of this application;
FIG. 2 is a diagram of another architecture of a multimedia data transmission system according to an embodiment of this application;
FIG. 3 is a diagram of a structure of a compute device according to an embodiment of this application;
FIG. 4 is a schematic flowchart of a control frame transmission method according to an embodiment of this application;
FIG. 5 is a schematic flowchart of another control frame transmission method according to an embodiment of this application;
FIG. 6 is a diagram of a frame structure of a control frame according to an embodiment of this application;
FIG. 7a is a diagram of a sending bit order of internal data of a control frame according to an embodiment of this application;
FIG. 7b is a diagram of a structure of an LFSR according to an embodiment of this application;
FIG. 7c is a diagram of a structure of another LFSR according to an embodiment of this application;
FIG. 8 is a diagram of a structure of an LLCF_PAD payload according to an embodiment of this application;
FIG. 9 is a diagram of a structure of another LLCF_PAD payload according to an embodiment of this application;
FIG. 10 is a diagram of a structure of a control frame transmission apparatus according to an embodiment of this application;
FIG. 11 is a diagram of a structure of a control frame transmission apparatus according to an embodiment of this application; and
FIG. 12 is a diagram of a structure of a control frame transmission apparatus according to an embodiment of this application.

### DESCRIPTION OF EMBODIMENTS

In embodiments of this application, to clearly describe the technical solutions in embodiments of this application, terms such as "first" and "second" are used to distinguish between same items or similar items that have basically same functions and purposes. A person skilled in the art may understand that the terms such as "first" and "second" do not limit a quantity and an execution sequence, and the terms such as "first" and "second" do not indicate a definite difference. There is no sequence or magnitude order between technical features described by "first" and "second".

In embodiments of this application, terms such as "example" or "for example" represent giving an example, an illustration, or a description. Any embodiment or design solution described as an "example" or "for example" in embodiments of this application should not be explained as being more preferred or having more advantages than another embodiment or design solution. Exactly, the word such as "example" or "for example" is used to present a related concept in a specific manner for ease of understanding.

In embodiments of this application, "at least one" may alternatively be described as one or more, and "more" may be two, three, four, or more. This is not limited in this application.

The network architecture and a scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

Currently, a control frame is usually sent periodically, and a receive end delimits the control frame based on a periodicity of the control frame (that is, determines a position of the control frame). This inevitably causes occupation of transmission bandwidth when no control frame needs to be transmitted, and consequently, control frame transmission is not flexible enough.

If the control frame is sent only when the control frame needs to be transmitted, control frame transmission flexibility is high. However, because the control frame is not sent at a fixed location, a corresponding mechanism needs to be configured to support delimitation of the control frame by the receive end. Therefore, a solution in which service data and a control frame are distinguished by using a character header, to support delimitation of the control frame by the receive end appears. However, configuring the dedicated character header still occupies data bandwidth, resulting in insufficient bandwidth utilization of data transmission.

In view of this, this application provides a control frame transmission solution, where control frame send location information indicates a specific location for transmitting a control frame subsequently. A peer end can delimit the control frame based on the information without configuring the dedicated character header. This improves bandwidth utilization of data transmission. Even if the control frame is sent only when the control frame needs to be transmitted, accurate delimitation of the control frame can be ensured. This improves bandwidth utilization of data transmission and improves flexibility of control frame transmission.

The following describes the solutions provided in embodiments of this application in detail with reference to accompanying drawings.

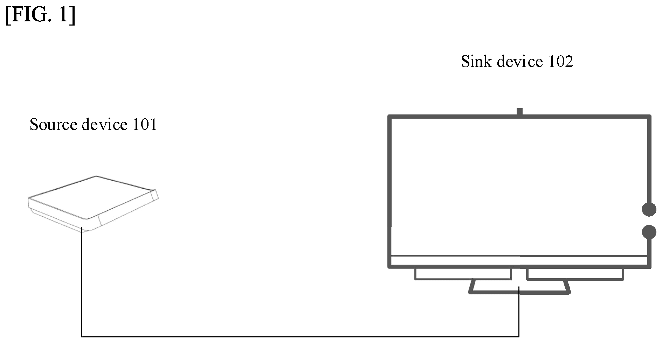

FIG. 1 shows a multimedia data transmission system. As shown in FIG. 1, the multimedia data transmission system may include a source device 101 and a sink device 102.

The source device 101 and the sink device 102 may be directly connected, or may be connected by using a routing device (the scenario is not shown in FIG. 1).

In the multimedia data transmission system shown in FIG. 1, the source device 101 transmits multimedia data to the sink device 102.

In a scenario, the source device 101 and the sink device 102 are unified multimedia interconnection devices deployed with a unified multimedia interconnection interface. The multimedia data transmission system shown in FIG. 1 implements data exchange between the unified multimedia interconnection devices. For example, a high-speed signal is transmitted between the unified multimedia interconnection devices to implement bidirectional transmission of an audio and a video, to meet requirements of audio and video transmission of devices such as a television, a computer, and a mobile phone.

In a scenario, one of the source device 101 or the sink device 102 is the unified multimedia interconnection device deployed with the unified multimedia interconnection interface, and the other is a third-party protocol device integrated with unified multimedia interconnection, to implement data exchange between the third-party protocol device and the unified multimedia interconnection device.

In a scenario, the source device 101 may be a set top box device. The sink device 102 may be a device with a screen. For example, the set top box device may obtain the multimedia data from a data server through a network by using a router, a switch, or another network device.

For example, the set top box device may also be referred to as a digital video converter box (set top box, STB), a set-top box, or the like. The set top box device is a device that connects a multimedia play device and an external signal source. A specific product form of the set top box device is not limited in this application.

The sink device 102 may be a smart television, a tablet, a smart screen, or the like, and is configured to receive and play the multimedia data. A specific product form of the sink device 102 is not limited in this application.

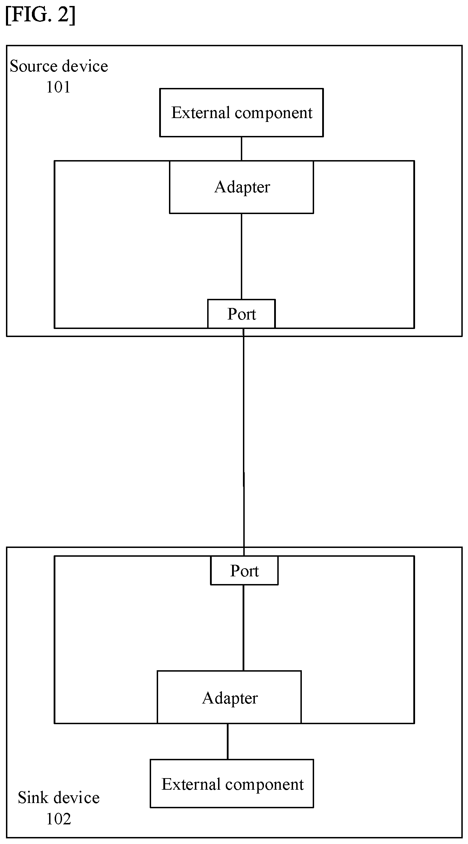

In a possible implementation, an internal architecture of the multimedia data transmission system shown in FIG. 1 may be shown in FIG. 2. As shown in FIG. 2, the source device 101 and the sink device 102 include a router and a transceiver apparatus, and the router includes an adapter and a port.

The router may encapsulate, by using the adapter, data generated by an external component into a unified multimedia interconnection packet, to form a unified multimedia interconnection service flow and forward the unified multimedia interconnection service flow to the port, and the port sends the unified multimedia interconnection service flow to the router of a peer device. The router of the peer device obtains a unified multimedia interconnection service flow restored by the port, and forwards the unified multimedia interconnection service flow to the adapter for processing. The adapter converts the unified multimedia interconnection service flow into data and sends the data to an external component.

For example, when the peer device is a third-party protocol device, the adapter in the router may be a third-party protocol adapter. The third-party protocol adapter receives third-party protocol data from a third-party protocol component, encapsulates the third-party protocol data into a tunnel packet (which may be specifically a unified multimedia interconnection protocol packet), forms a service flow, and sends the service flow to a corresponding port, and the port forwards the service flow to the router of the peer device. The router of the peer device obtains the service flow (for example, the unified multimedia interconnection service flow) restored by the port, and forwards the service flow to a corresponding third-party protocol adapter for processing. The third-party protocol adapter processes the service flow into third-party protocol data and sends the third-party protocol data to the third-party protocol component.

According to one aspect, an embodiment of this application provides a diagram of a structure of a compute device 30. The compute device 30 may implement a function of the source device 101 or the sink device 102 shown in FIG. 1 or FIG. 2.

For example, the compute device 30 may implement a function of the source device 101 or the sink device 102 at a logical layer shown in FIG. 1 or FIG. 2.

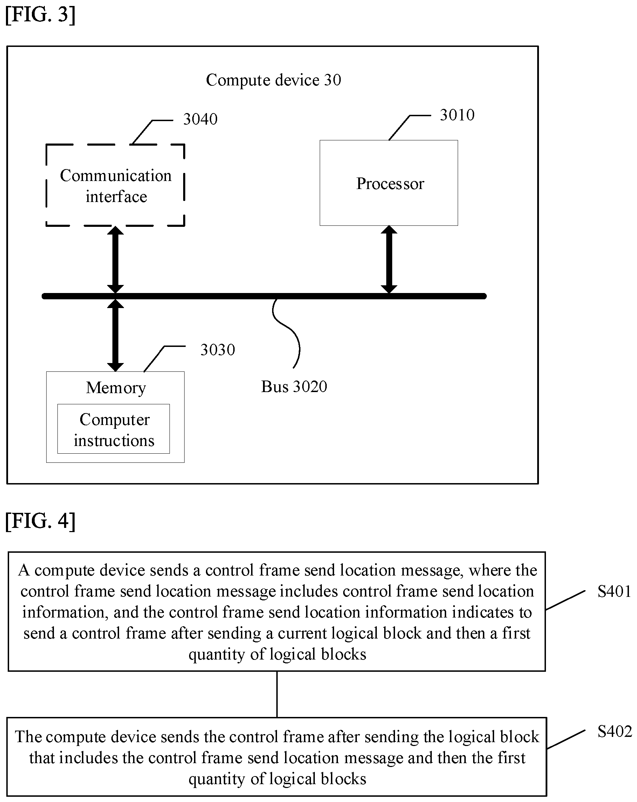

As shown in FIG. 3, the compute device 30 may include a processor 3010, a bus 3020, a memory 3030, and a communication interface 3040. The processor 3010, the memory 3030, and the communication interface 3040 are connected through the bus 3020.

It should be understood that, in this embodiment, the processor 3010 may be a central processing unit (central processing unit, CPU), or the processor 3010 may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, any conventional processor, or the like.

Alternatively, the processor 3010 may be a graphics processing unit (graphics processing unit, GPU), a neural network processing unit (neural network processing unit, NPU), a microprocessor, an ASIC, or one or more integrated circuits configured to control program execution in the solutions of this application.

The communication interface 3040 is configured to implement communication between the compute device 30 and an external device or component.

The bus 3020 may include a path for transmitting information between the foregoing components (for example, the processor 3010 and the memory 3030). In addition to a data bus, the bus 3020 may further include a power bus, a control bus, a status signal bus, and the like. However, for clear description, various types of buses in the figure are marked as the bus 3020. The bus 3020 may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. The bus 3020 may be classified into an address bus, a data bus, a control bus, or the like.

In an example, the compute device 30 may include a plurality of processors. The processor may be a multi-CPU (multi-CPU) processor. The processor herein may be one or more devices, circuits, and/or computing units configured to process data (for example, computer program instructions).

It should be noted that, in FIG. 3, an only example in which the compute device 30 includes one processor 3010 and one storage 3030 is used. The processor 3010 and the storage 3030 each indicate a type of component or device. In a specific embodiment, a quantity of each type of component or device may be determined based on a service requirement.

The memory 3030 may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, a plurality of forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

For example, the processor 3010 may implement the following functions by running or executing a software program and/or a module stored in the memory 3030:

sending a control frame send location message, where the control frame send location message includes control frame send location information, the control frame send location information indicates to send a control frame after sending a current logical block and then a first quantity of logical blocks, and the first quantity is a quantity of logical blocks that is indicated by the control frame send location information; and sending the control frame after sending the logical block that includes the control frame send location message and then the first quantity of logical blocks.

According to another aspect, an embodiment of this application provides a control frame transmission method, applied to the source device 101 or the sink device 102 in the multimedia data transmission system shown in FIG. 1 or 2, or a chip in the source device 101, or a chip in the sink device 102, to implement a control frame transmission function at a logical layer. The method may be executed by a compute device. A transmit device described below may be the source device 101 or a chip in the source device 101, and a receive device may be the sink device 102 or a chip in the sink device 102.

A logical layer control frame (Logical Layer Control Frame, LLCF) is a code pattern for implementing link management functions such as link training and status update. The logical layer control frame may also be referred to as a control frame (Control Frame, CF).

For example, the control frame may be used to transfer link management and/or a training sequence.

In a possible implementation, the control frame is transmitted over an independent lane.

As shown in FIG. 4, the control frame transmission method provided in embodiments of this application may include the following steps.

S401: Send a control frame send location message, where the control frame send location message includes control frame send location information, and the control frame send location information indicates to send the control frame after sending a current logical block and then a first quantity of logical blocks.

The first quantity is a quantity of logical blocks that is indicated by the control frame send location information.

Specifically, when link management needs to be performed via the control frame, an upper layer (which may be a transport layer or an adapter) of a logical layer of the compute device determines the control frame send location information, to determine a specific quantity of logical blocks, following the current logical block, after which the control frame is to be sent. In other words, the control frame send location information indicates to send the control frame after sending the current logical block and then the first quantity of logical blocks.

Then, the logical layer constructs the control frame send location message, where the control frame send location message includes the control frame send location information, and the logical layer fills the control frame send location message into the logical block for sending to a next layer in a protocol, so that the control frame send location message is transmitted to a receive end, to help the receive end obtain the control frame send location information.

It should be understood that the compute device sending the control frame send location message in S401 means filling the control frame send location message into the logical block for sending. A filling process is not limited and described in embodiments of this application.

S402: Send the control frame after sending the logical block that includes the control frame send location message and then the first quantity of logical blocks.

Specifically, a location at which the control frame is sent needs to strictly match a location indicated by the control frame send location information. In other words, the control frame needs to be sent at the location indicated by the control frame send location information.

For example, a specific type of the control frame may be indicated by the upper layer of the logical layer. Different link management requirements correspond to different control frames.

Specifically, in S401, after the logical block that includes the control frame send location message and then the first quantity of logical blocks are sent, the control frame indicated by the upper layer is sent.

A specific function and a name of the control frame are not specifically limited in embodiments of this application. For example, the control frame may include but is not limited to any one of the following:
(1) a sequence frame used for clock locking in a lane training phase, or a logical layer training sequence 0 (Control Frame, Training Sequence0, LLCF_TS0);
(2) a sequence frame used for channel parameter optimization calculation in a lane training phase, or a logical layer training sequence 1 (Control Frame, Training Sequence1, LLCF_TS1);
(3) a sequence frame used for a receiver and a transmitter to acknowledge a synchronized state in a lane training phase, or a logical layer training sequence 2 (Control Frame, Training Sequence2, LLCF_TS2);
(4) a frame used to mark an end of lane data transmission, or a logical layer electrical idle (Control Frame, Electrical Idle, LLCF_EI) frame;
(5) a frame used to mark a start location of a new logical block, or a logical layer data start (Control Frame, Data Start, LLCF_DS) frame;
(6) a frame used for delay detection, or a logical layer lane de-skew test (Control Frame, De-Skew Test, LLCF_DST) frame;
(7) a frame used for waking up, or a logical layer electrical idle exit (Control Frame, Electrical Idle, LLCF_EIE) frame; and
(8) a frame used for padding LLCF_PAD.

Further, a code pattern of the control frame is fixed.

Further, a structure of the control frame may include one or more of the following: a frame header or a payload.

For example, the control frame is the sequence frame used for clock locking in a lane training phase, or the logical layer training sequence 0, and the control frame includes the payload. For example, the payload of the control frame may be 0xAA of any length.

Alternatively, the control frame is the sequence frame used for channel parameter optimization calculation in a lane training phase, or the logical layer training sequence 1, and the control frame includes the payload. For example, the payload of the control frame may be a fixed sequence. Content of the sequence is not limited in embodiments of this application.

Alternatively, the control frame is the sequence frame used for a receiver and a transmitter to acknowledge a synchronized state in a lane training phase, or the logical layer training sequence 2, the control frame includes the frame header and the payload, and the frame header includes a frame type and a checksum field. For example, a frame type field is 0x6C, and the checksum field is 0x56. The payload may be obtained by performing bitwise inversion (bitwise inversion) on the logical layer training sequence 1.

Alternatively, the control frame is the frame used to mark an end of lane data transmission, or the logical layer electrical idle frame, the control frame includes the frame header, and the frame header includes a frame type and a checksum field. For example, a frame type field is 0x65, and the checksum field is 0x69.

Alternatively, the control frame is the frame used to mark a start location of a new logical block, or the logical layer data start frame, the control frame includes the frame header, and the frame header includes a frame type and a checksum field. For example, a frame type field is 0x4B, and the checksum field is 0xA3.

Alternatively, the control frame is the frame used for delay detection, or the logical layer lane de-skew test frame, the control frame includes the frame header, and the frame header includes a frame type and a checksum field. For example, a frame type field is 0x5A, and the checksum field is 0xD4.

Alternatively, the control frame is the frame used for waking up, or the logical layer electrical idle exit frame, and the control frame includes the payload.

Alternatively, the control frame is the frame used for padding, the control frame includes the frame header, and the frame header includes a frame type and a checksum field. For example, a frame type field is 0xD2, and the checksum field is 0x65.

According to the solution provided in this application, before the control frame is sent, a specific send location of the control frame may be indicated by the control frame send location message, so that the receive end can delimit the control frame without configuring a dedicated character header. This improves bandwidth utilization of data transmission. Even if the control frame is sent only when the control frame needs to be transmitted, accurate delimitation of the control frame can be ensured. This improves bandwidth utilization of data transmission and improves flexibility of control frame transmission.

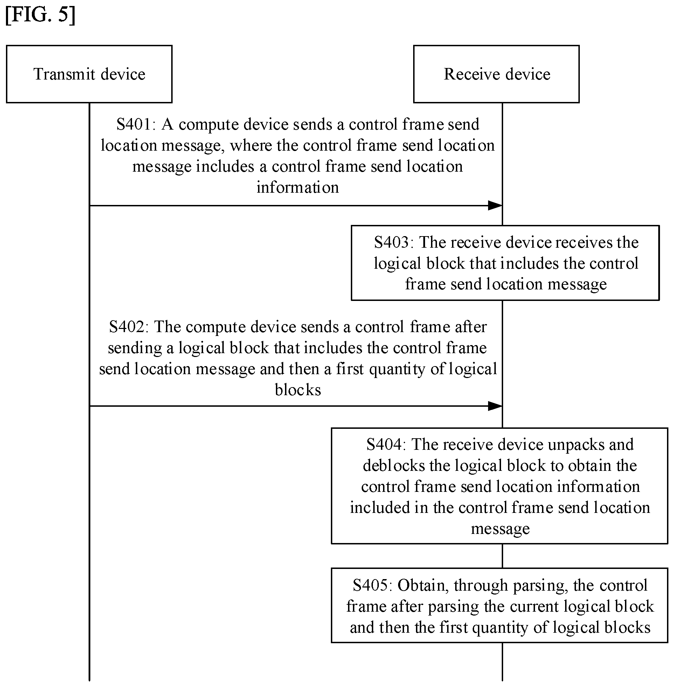

Further, after a transmit device transmits the control frame in S401 and S402, as shown in FIG. 5, the control frame transmission method provided in this application may further include processes S403 to S405 in which a receive device receives the control frame.

S403: A receive device receives a logical block that includes a control frame send location message.

For example, the logical block that includes the control frame send location message and that is received by the receive device in S403 may be the logical block sent by the transmit device in S401. Details are not described herein again.

S404: The receive device unpacks and deblocks the logical block to obtain the control frame send location information included in the control frame send location message.

The control frame send location information indicates to send the control frame after sending the current logical block and then the first quantity of logical blocks, and the first quantity is a quantity of logical blocks that is indicated by the control frame send location information.

The control frame send location information is described in detail in S401, and details are not described herein again.

S405: Obtain, through parsing, the control frame after parsing the current logical block and then the first quantity of logical blocks.

The current logical block is the logical block that includes the control frame send location message and that is received in S403.

Specifically, obtaining, through parsing, the control frame after parsing the current logical block and then the first quantity of logical blocks in S405 may be understood as: starting from a position after parsing the current logical block and then the first quantity of logical blocks, obtaining, through parsing, the control frame based on a frame structure of the control frame.

The following describes an example of the foregoing control frame send location message.

The control frame send location message (CF Send location message, CFSLM) is an information parameter indicating a subsequent CF send location.

The CFSLM can be used when a link is in a service transmission state. When a link status changes (for example, in a scenario such as link training, state switching, or bandwidth adjustment), before a CF needs to be sent, the transmit end needs to send the CFSLM, to implement communication by the transmit end sending the CF and the receive end detecting the CF.

Communication by the transmit end sending the CF and the receive end detecting the CF means that the transmit end sends, by using the CFSLM, a location at which the transmit end sends the CF to the receive end, so that the receive end detects the CF based on the CFSLM.

Specifically, a location at which the transmit end sends the CFSLM, parameter information in the CFSLM, and a subsequent CF send location need to be completely matched. In other words, the CF needs to be sent after sending an LLB that includes the CFSLM and then a quantity of LLBs that is specified by the control frame send location information (CF Send Location, CF_SL).

The CFSLM does not need to respond.

Specifically, the CFSLM can be transmitted only over a main link (Main link, ML). Therefore, the CFSLM is encapsulated as a logical layer main link management packet (Logical Layer Main link Management Packet, LLMMP). For example, an arrangement format of the LLMMP (the LLMMP obtained by encapsulating the CFSLM) corresponding to the CFSLM may be shown in Table 1.

**Table 1**

| Byte | Bit | Field name | Description |
|---|---|---|---|
| 0 | 7:0 | Logical layer packet type (Logical Layer Packet Type, LLPT) | Packet type set to 0xF0 |
| 1 | 5:0 | Logical layer management message type (Logical Layer Management Message Type, LLMMT) | Logical layer management message type set to 0x24 |
| | 7:6 | Reserved (reserved) | Reserved field |
| 2 | 7:0 | Control frame send location information (CF Send Location, CF_SL) | CF Send Location, control frame send location information: |
| | | | 00h: After sending a current LLB, a CF is sent immediately; |
| | | | 01h: After sending a current LLB and then one LLB, a CF is sent; or |
| | | | xxh: After sending a current LLB and then xxh LLBs, a CF is sent. |
| 3 to 5 | 7:0 | Reserved | Reserved field |
| 6 to 7 | 7:0 | CRC | A checksum field that performs checksum on byte 1 to byte 5 |

It should be noted that Table 1 describes only an example of an arrangement format of the LLMMP corresponding to the CFSLM, and does not constitute a specific limitation.

The following describes an example of the foregoing control frame.

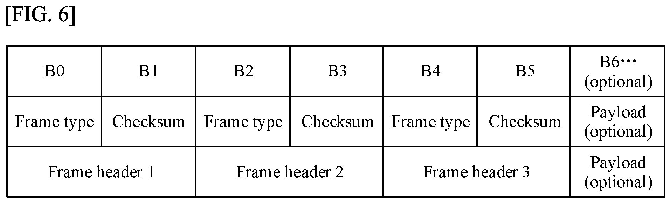

The control frame may be completely sent on a single lane (lane), and is used to transmit information such as link management or a training sequence. An insertion position of the control frame is indicated by the CFSLM message at the logical layer. A frame structure of the control frame may be shown in FIG. 6, and includes a frame type, checksum, and an optional payload.

Description of each field in the frame structure of the control frame may be shown in the following Table 2.

**Table 2**

| Field | Description |
|---|---|
| Frame type | Indicates a type of a frame. For details, refer to the description in Table 3. A length is 1 byte. |
| | A checksum bit for the frame type. A length is 1 byte. |
| | Use CRC-8 with the following configuration: |
| | Width (width): 8 |
| Checksum | Poly (polynomial): 07h |
| | Init (initial value): 00h |
| | Refln (input reflection): True |
| | RefOut (output reflection): True |
| | XorOut (output XOR): 55h |
| | A checksum bit can correct a 1-bit (bit) error and detect a 2-bit error. |
| Payload | For details about the information carried in this type of control frame, see the description of each control frame. A length is increased. |

In the frame structure of the control frame shown in FIG. 6, a frame header 1, a frame header 2, and a frame header 3 have same content, and form repetition code.

Unless otherwise specified, the control frame (frame header+payload) is not scrambled or pre-coded.

For example, a summary of control frames at the logical layer is shown in Table 3. Table 3 shows specific fields of fields in frame structures of various types of control frames at the logical layer.

**Table 3**

| **Control frame** | **Frame type** | **Checksum** | **Payload length** | **Description** |
|---|---|---|---|---|
| LLCF_TS0 | -- | -- | Increased | A clock locking sequence whose payload is a 01 sequence. |
| LLCF_TS1 | -- | -- | Increased | A training sequence whose payload is PRBS11. |
| LLCF_TS2 | 0x6C | 0x56 | 8 bytes | Used for receiver and transmitter synchronization acknowledgment. A payload is a PRBS11 sequence. |
| LLCF_EI | 0x65 | 0x69 | 0 | Mark an end of frame data. |
| LLCF_DS | 0x4B | 0xA3 | 0 | Mark a start of new LLB transmission. |
| LLCF_DST | 0x5A | 0xD4 | 0 | Used for delay detection. |
| LLCF_EIE | -- | -- | Increased | Used for electrical idle wakeup. |
| LLCF_PAD | 0xD2 | 0x65 | Increased | Used only for padding and directly discarded after reception. |

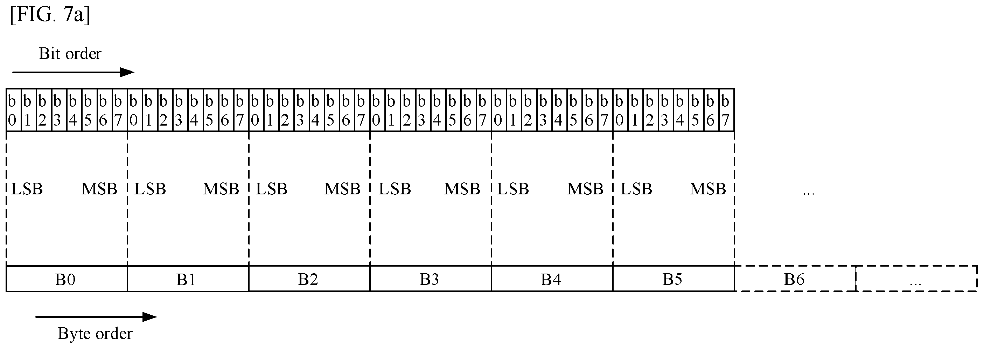

For example, a sending bit order of internal data of the control frame may be shown in FIG. 7a. The sending bit order of the control frame is the same as a bit order on the line (link). A least significant bit (least significant bit, LSB) indicates a start location of a byte in a control frame, and a most significant bit (most significant bit, MSB) indicates an end position of a byte in a control frame.

For example, for a constant value, for example, 0xABCD, 0xAB is a first received byte, namely, B0, and 0xCD is a later received byte, namely, B1.

This application provides the following several types of control frames. The following separately describes examples of the various types of control frames.

### 1. LLCF_TS0

LLCF_TS0 is used for clock locking in a training phase. A payload is 0xAA of any length.

### 2. LLCF_TS1

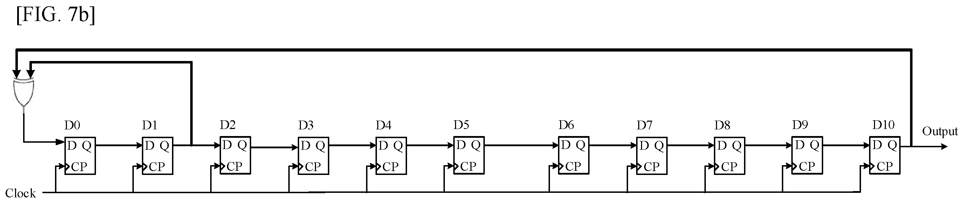

LLCF_TS1 is used for channel parameter optimization calculation in a training phase. A payload is a PRBS11 sequence of any length. A polynomial is G(x)=x¹¹+x²+1, a seed is 00110011001b, and a corresponding linear feedback shift register (Linear Feedback Shift Register, LFSR) is shown in FIG. 7b.

A PRBS sequence is continuously generated, and a generated bit sequence is consistent with a bit sequence sent on a line. Binary bit sequences of a first few groups of 64 bits are shown in Table 4.

**Table 4**

| No. | Payload |
|---|---|
| 0 | 00110011001011010010111000101110 01010001101000101001000001000010 |
| 1 | 10100000010001010101111101110110 01110010010110000101110000001001 |
| 2 | 11111110100110011011110000111001 11111001011001101000111100010100 |
| 3 | 11010111010010001101111010110110 01000111000010100111111011110011 |
| 4 | 00011000011111000000110010101011 01000100011101011111001000110010 |
| 5 | 11111000010011000000101101010100 01110111010110001101110000011100 |
| 6 | 10101001111011101001101100010110 11010111000111011000001101101010 |
| 7 | 11011011101101101100011100011111 00101001100001000011111101010011 |
| 8 | 00100010110100000100100000001011 11111110110011001110000111100101 |
| 9 | 01100101110110100011011011111000 11100110101100001110110101001110 |
| 10 | 00100001101011111100010011001010 00011110111111001110011000011010 |
| 11 | 01010110111101110001100011010110 10110111000100100111110100001100 |
| ... | ... |

### 3. LLCF_TS2

LLCF_TS2 is used for a receiver and a transmitter to acknowledge a synchronized state. A length of LLCF_TS2 is fixed at 8 bytes. A payload is obtained by performing bitwise inversion (bitwise negation) on a PRBS11 sequence.

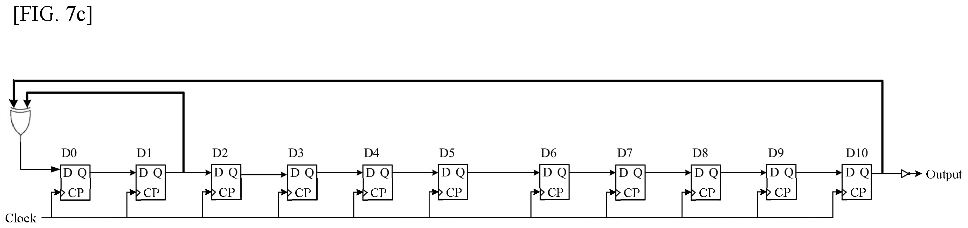

A polynomial of LLCF_TS2 is G(x)=x¹¹+x²+1, a seed is 00110011001b, and a corresponding LFSR is shown in FIG. 7c. A PRBS sequence is continuously generated, and a generated bit sequence is consistent with a bit sequence sent on a line.

Binary bit sequences of a first few groups of 64 bits are shown in Table 5.

**Table 5**

| No. | Payload |
|---|---|
| 0 | 11001100110100101101000111010001 10101110010111010110111110111101 |
| 1 | 01011111101110101010000010001001 10001101101001111010001111110110 |
| 2 | 00000001011001100100001111000110 00000110100110010111000011101011 |
| 3 | 00101000101101110010000101001001 10111000111101011000000100001100 |
| 4 | 11100111100000111111001101010100 10111011100010100000110111001101 |
| 5 | 00000111101100111111010010101011 10001000101001110010001111100011 |
| 6 | 01010110000100010110010011101001 00101000111000100111110010010101 |
| 7 | 00100100010010010011100011100000 11010110011110111100000010101100 |
| 8 | 11011101001011111011011111110100 00000001001100110001111000011010 |
| 9 | 10011010001001011100100100000111 00011001010011110001001010110001 |
| 10 | 11011110010100000011101100110101 11100001000000110001100111100101 |
| 11 | 10101001000010001110011100101001 01001000111011011000001011110011 |
| ... | ... |

### 4. LLCF_EI

LLCF_EI is used to mark an end of lane (lane) transfer. Subsequent data should be discarded. Data reception of a lane that stops receiving data is restarted after the lane is enabled again. The control frame has no payload.

It should be noted that a specific sending moment of LLCF_EI and a lane restart control process are not limited in embodiments of this application.

### 5. LLCF_DS

LLCF_DS marks a start location of a new LLB. LLB data is transmitted following LLCF_DS. The control frame has no payload.

A transmit end should transmit LLCF_DS on all valid lanes simultaneously during first transmission or lane quantity switching (due to low power consumption or other reasons). In a non-delay correction scenario, a skew (skew) of LLCF_DS on a line needs to be less than Ttx_skew (deviation threshold).

LLCF_DS needs to be sent on all valid lanes simultaneously.

### 6. LLCF_DST

LLCF_DST is used for delay measurement. The control frame has no payload.

### 7. LLCF_EIE

LLCF_EIE is used for waking up by a transmit end over a high-speed link line. A payload length of LLCF_EIE can be configured based on actual requirements.

### 8. LLCF_PAD

The control frame is used for padding. This type of control frame is allowed to be sent only after link establishment and before transmission of an LLB. After the LLB is sent, this type of control frame is not allowed to be sent. A receive end directly discards the control frame after receiving the control frame.

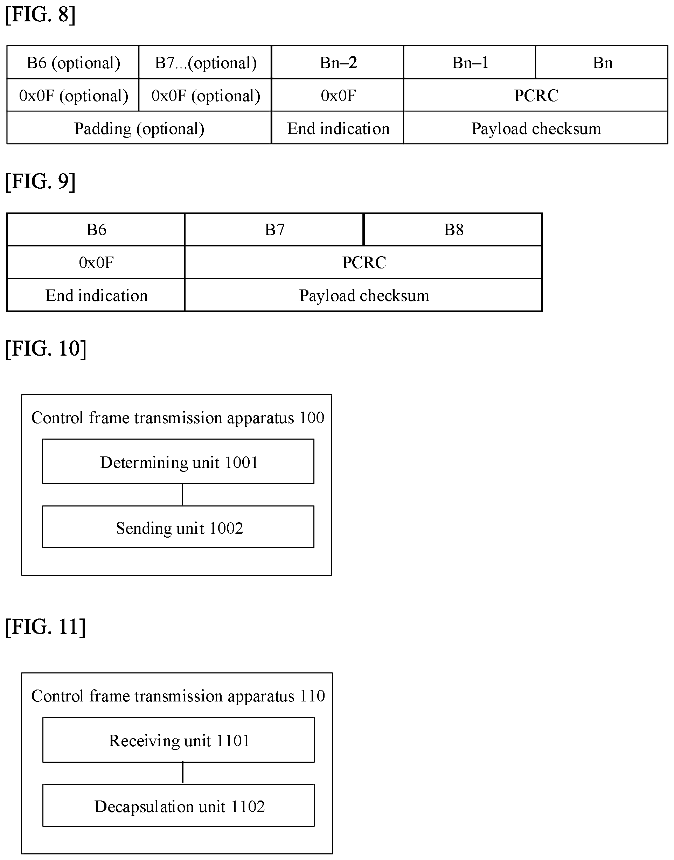

A payload length of LLCF_PAD is increased, and a payload structure is shown in FIG. 8. As shown in FIG. 8, a payload of LLCF_PAD starts with a padding byte 0x0F. The padding byte is continuously sent before padding ends. When padding ends, an end indication byte 0xF0 is sent. Finally, a 2-byte CRC result obtained by calculating both the padding and end indication is sent.

In the CRC calculation method herein, a generation polynomial corresponding to CRC is g(x)=x¹⁶+x¹²+x⁵+1.

In payload checksum shown in FIG. 8, a length of a remaining payload is less than 32 bytes other than the payload check.

In LLCF_PAD, the end indication byte may be directly sent, and no padding byte is sent. In this case, only the end indication byte is calculated in CRC. A frame structure of LLCF_PAD in the foregoing case is shown in FIG. 9, and there is no padding byte.

The control frame LLCF_PAD is used to adjust skew (skew) between different lanes when a delay measurement feature is supported in both reception and transmission negotiation. In a link width adjustment scenario, the control frame LLCF_PAD is sent on a lane resuming service transmission to ensure that LLCF_DS is sent synchronously on all lanes.

The foregoing mainly describes the solutions provided in embodiments of the present invention from a perspective of a working principle of the compute device. It may be understood that, to implement the foregoing functions, the compute device or the like includes corresponding hardware structures and/or software modules for executing the functions. A person skilled in the art should be easily aware that, in combination with the units and algorithm steps in the examples described in embodiments disclosed in this specification, the present invention may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In embodiments of the present invention, functional modules of the compute device or the like may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

When each functional module is obtained through division based on each corresponding function, FIG. 10 shows a control frame transmission apparatus 100 according to embodiments of this application. The control frame transmission apparatus 100 is configured to implement a function of the compute device in the foregoing method embodiment. As shown in FIG. 10, the control frame transmission apparatus 100 may include a determining unit 1001 and a sending unit 1002. The determining unit 1001 is configured for control frame send location information. The sending unit 1002 is configured to perform the processes S401 and S402 in FIG. 4. All related content of the steps in the foregoing method embodiments may be cited in function descriptions of the corresponding functional modules. Details are not described herein again.

When each functional module is obtained through division based on each corresponding function, FIG. 11 shows another control frame transmission apparatus 110 according to embodiments of this application. The control frame transmission apparatus 110 is configured to implement a function of the receive device in the foregoing method embodiment. As shown in FIG. 11, the control frame transmission apparatus 110 may include a receiving unit 1101 and a decapsulation unit 1102. The determining unit 1001 is configured to perform the process S403 in FIG. 4. The decapsulation unit 1102 is configured to perform the processes S404 and S405 in FIG. 4. All related content of the steps in the foregoing method embodiments may be cited in function descriptions of the corresponding functional modules. Details are not described herein again.

In another possible implementation, the control frame is transmitted over an independent lane, to ensure integrity of a code pattern of the control frame.

In another possible implementation, the control frame includes: a sequence frame used for clock locking in a lane training phase, or a logical layer training sequence 0.

In another possible implementation, the control frame includes: a sequence frame used for channel parameter optimization calculation in a lane training phase, or a logical layer training sequence 1.

In another possible implementation, the control frame includes: a sequence frame used for a receiver and a transmitter to acknowledge a synchronized state in a lane training phase, or a logical layer training sequence 2.

In another possible implementation, the control frame includes: a frame used to mark an end of lane data transmission, or a logical layer electrical idle frame.

In another possible implementation, the control frame includes: a frame used to mark a start location of a new logical block, or a logical layer data start frame.

In another possible implementation, the control frame includes: a frame used for delay detection, or a logical layer lane de-skew test frame.

In another possible implementation, the control frame includes: a frame used for waking up, or a logical layer electrical idle exit frame.

In another possible implementation, the control frame includes: a frame used for padding.

In another possible implementation, the code pattern of the control frame is fixed. In other words, content included in the control frame is fixed.

In another possible implementation, the control frame includes one or more of the following: a frame header or a payload.

The control frame is the sequence frame used for clock locking in a lane training phase, or the logical layer training sequence 0, and the control frame includes the payload.

Alternatively, the control frame is the sequence frame used for channel parameter optimization calculation in a lane training phase, or the logical layer training sequence 1, and the control frame includes the payload.

Alternatively, the control frame is the sequence frame used for a receiver and a transmitter to acknowledge a synchronized state in a lane training phase, or the logical layer training sequence 2, the control frame includes the frame header and the payload, and the frame header includes a frame type and a checksum field.

Alternatively, the control frame is the frame used to mark an end of lane data transmission, or the logical layer electrical idle frame, the control frame includes the frame header, and the frame header includes a frame type and a checksum field.

Alternatively, the control frame is the frame used to mark a start location of a new logical block, or the logical layer data start frame, the control frame includes the frame header, and the frame header includes a frame type and a checksum field.

Alternatively, the control frame is the frame used for delay detection, or the logical layer lane de-skew test frame, the control frame includes the frame header, and the frame header includes a frame type and a checksum field.

Alternatively, the control frame is the frame used for waking up, or the logical layer electrical idle exit frame, and the control frame includes the payload.

Alternatively, the control frame is the frame used for padding, the control frame includes the frame header and the payload, and the frame header includes a frame type and a checksum field.

In another possible implementation, the control frame is used to transfer link management and/or a training sequence.

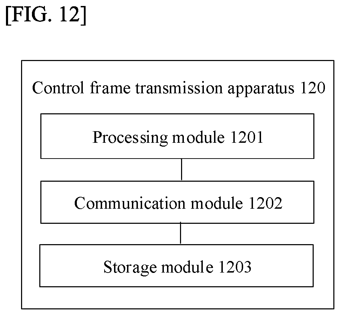

When an integrated unit is used, FIG. 12 shows a control frame transmission apparatus 120 according to embodiments of this application, configured to implement a function of the compute device or the receive device in the foregoing embodiments. The control frame transmission apparatus 120 includes a processing module 1201 and a communication module 1202. The processing module 1201 is configured to control and manage an action of the control frame transmission apparatus 120, and the communication module 1202 is configured to communicate with another device. For example, the processing module 1201 is configured to perform any process in S401 to S405 in FIG. 4, and the communication module 1202 is configured for exchanging between the control frame transmission apparatus 120 and another device. The control frame transmission apparatus 120 may further include a storage module 1203, configured to store program code and data of the control frame transmission apparatus 120.

The processing module 1201 may be the processor 3010 in the physical structure of the compute device 30 shown in FIG. 3, or may be a processor or a controller. For example, the processing module 1201 may be a CPU, a general-purpose processor, a DSP, an ASIC, an FPGA or another programmable logic device, a transistor logic device, a hardware component, or any combination thereof. The processor may implement or execute various example logical blocks, modules, and circuits described with reference to content disclosed in this application. The processing module 1201 may alternatively be a combination for implementing computing functions, such as a combination of one or more microprocessors, a combination of a DSP and a microprocessor, or the like. The communication module 1202 may be the communication interface 3040 in the physical structure of the compute device 30 shown in FIG. 3. The communication module 1202 may be a communication port, or may be a transceiver, a transceiver circuit, a communication interface, or the like. Alternatively, the communication interface may communicate with another device through the foregoing element that has receiving and sending functions. The foregoing element that has receiving and sending functions may be implemented through an antenna and/or a radio frequency apparatus. The storage module 1203 may be the memory 3030 in the physical structure of the compute device 30 shown in FIG. 3.

As described above, the control frame transmission apparatus 100, the control frame transmission apparatus 110, and the control frame transmission apparatus 120 provided in embodiments of this application may be configured to implement functions of the compute device or the receive device in the foregoing embodiments of this application. For ease of description, only parts related to embodiments of this application are shown. For specific technical details that are not disclosed, refer to embodiments of this application.

According to another aspect, an embodiment of this application provides a data transmission system that includes the control frame transmission apparatus 100 and/or the control frame transmission apparatus 110.

According to still another aspect, an embodiment of this application provides a data transmission system that includes a data sending apparatus and/or a data receiving apparatus. The data sending apparatus is configured to perform a function of the transmit device in the foregoing method embodiment, and the data receiving apparatus is configured to perform a function of the receive device in the foregoing method embodiment.

As another form of this embodiment, a computer-readable storage medium is provided. Instructions are stored in the computer-readable storage medium, and when the instructions are executed, the control frame transmission method in the foregoing method embodiment is performed.

As still another form of this embodiment, a computer program product that includes instructions is provided, and when the computer program product is run on a computer, the computer is enabled to perform the control frame transmission method in the foregoing method embodiment.

As yet still another form of this embodiment, a chip is provided. The chip includes one or more interface circuits and one or more processors. The interface circuit is configured to: receive a signal from a memory of an electronic device, and send the received signal to the processor, where the signal includes computer instructions stored in the memory. When the processor executes the computer instructions, the electronic device is enabled to perform operation steps of the method according to the first aspect or any possible implementation.

An embodiment of this application further provides a chip system. The chip system includes a processor, configured to implement the technical method in embodiments of the present invention. In a possible design, the chip system further includes a memory, configured to store program instructions and/or data that are necessary in embodiments of the present invention. In a possible design, the chip system further includes a memory, configured for the processor to invoke application program code stored in the memory. The chip system may include one or more chips, or may include a chip and another discrete component. This is not specifically limited in embodiments of this application.

A person skilled in the art should be easily aware that, in this application, in combination with the units and method steps in the examples described in embodiments disclosed in this application may be implemented in a form of hardware or a combination of hardware and computer software. Whether a function is performed by hardware or hardware driven by computer software depends on particular application scenarios and design constraints of the technical solutions.

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded or executed on a computer, the procedures or functions according to embodiments of the present invention or this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be an SSD.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A control frame transmission method, wherein the method comprises:
sending a control frame send location message, wherein the control frame send location message comprises control frame send location information, the control frame send location information indicates to send a control frame after sending a current logical block and then a first quantity of logical blocks, and the first quantity is a quantity of logical blocks that is indicated by the control frame send location information; and
sending the control frame after sending the logical block that comprises the control frame send location message and then the first quantity of logical blocks.

2. The method according to claim 1, wherein the control frame is transmitted over an independent lane.

3. The method according to claim 1 or 2, wherein the control frame comprises one or more of the following:
a sequence frame used for clock locking in a lane training phase, or a logical layer training sequence 0;
a sequence frame used for channel parameter optimization calculation in a lane training phase, or a logical layer training sequence 1;
a sequence frame used for a receiver and a transmitter to acknowledge a synchronized state in a lane training phase, or a logical layer training sequence 2;
a frame used to mark an end of lane data transmission, or a logical layer electrical idle frame;
a frame used to mark a start location of a new logical block, or a logical layer data start frame;
a frame used for delay detection, or a logical layer lane de-skew test frame;
a frame used for waking up, or a logical layer electrical idle exit frame; or
a frame used for padding.

4. The method according to claim 3, wherein the control frame comprises one or
more of the following: a frame header or a payload; and
the control frame is the sequence frame used for clock locking in a lane training phase, or the logical layer training sequence 0, and the control frame comprises the payload;
or
the control frame is the sequence frame used for channel parameter optimization calculation in a lane training phase, or the logical layer training sequence 1, and the control frame comprises the payload;
or
the control frame is the sequence frame used for a receiver and a transmitter to acknowledge a synchronized state in a lane training phase, or the logical layer training sequence 2, the control frame comprises the frame header and the payload, and the frame header comprises a frame type and a checksum field;
or
the control frame is the frame used to mark an end of lane data transmission, or the logical layer electrical idle frame, the control frame comprises the frame header, and the frame header comprises a frame type and a checksum field;
or
the control frame is the frame used to mark a start location of a new logical block, or the logical layer data start frame, the control frame comprises the frame header, and the frame header comprises a frame type and a checksum field;
or
the control frame is the frame used for delay detection, or the logical layer lane de-skew test frame, the control frame comprises the frame header, and the frame header comprises a frame type and a checksum field;
or
the control frame is the frame used for waking up, or the logical layer electrical idle exit frame, and the control frame comprises the payload;
or
the control frame is the frame used for padding, the control frame comprises the frame header and the payload, and the frame header comprises a frame type and a checksum field.

5. The method according to any one of claims 1 to 4, wherein the control frame is used to transfer link management and/or a training sequence.

6. A control frame transmission apparatus, wherein the apparatus comprises:
a determining unit, configured to determine control frame send location information, wherein the control frame send location information indicates to send a control frame after sending a current logical block and then a first quantity of logical blocks, and the first quantity is a quantity of logical blocks that is indicated by the control frame send location information; and
a sending unit, configured to send a control frame send location message, wherein the control frame send location message comprises the control frame send location information; and
the sending unit is further configured to send the control frame after sending the logical block that comprises the control frame send location message and then the first quantity of logical blocks.

7. The apparatus according to claim 6, wherein the control frame is transmitted over an independent lane.

8. The apparatus according to claim 6 or 7, wherein the control frame comprises:
a sequence frame used for clock locking in a lane training phase, or a logical layer training sequence 0; or
a sequence frame used for channel parameter optimization calculation in a lane training phase, or a logical layer training sequence 1; or
a sequence frame used for a receiver and a transmitter to acknowledge a synchronized state in a lane training phase, or a logical layer training sequence 2; or
a frame used to mark an end of lane data transmission, or a logical layer electrical idle frame; or
a frame used to mark a start location of a new logical block, or a logical layer data start frame; or
a frame used for delay detection, or a logical layer lane de-skew test frame; or a frame used for waking up, or a logical layer electrical idle exit frame; or a frame used for padding.

9. The apparatus according to claim 8, wherein the control frame comprises one or
more of the following: a frame header or a payload; and
the control frame is the sequence frame used for clock locking in a lane training phase, or the logical layer training sequence 0, and the control frame comprises the payload;
or
the control frame is the sequence frame used for channel parameter optimization calculation in a lane training phase, or the logical layer training sequence 1, and the control frame comprises the payload;
or
the control frame is the sequence frame used for a receiver and a transmitter to acknowledge a synchronized state in a lane training phase, or the logical layer training sequence 2, the control frame comprises the frame header and the payload, and the frame header comprises a frame type and a checksum field; or
the control frame is the frame used to mark an end of lane data transmission, or the logical layer electrical idle frame, the control frame comprises the frame header, and the frame header comprises a frame type and a checksum field;
or
the control frame is the frame used to mark a start location of a new logical block, or the logical layer data start frame, the control frame comprises the frame header, and the frame header comprises a frame type and a checksum field;
or
the control frame is the frame used for delay detection, or the logical layer lane de-skew test frame, the control frame comprises the frame header, and the frame header comprises a frame type and a checksum field;
or
the control frame is the frame used for waking up, or the logical layer electrical idle exit frame, and the control frame comprises the payload;
or
the control frame is the frame used for padding, the control frame comprises the frame header and the payload, and the frame header comprises a frame type and a checksum field.

10. The method according to any one of claims 6 to 9, wherein the control frame is used to transfer link management and/or a training sequence.

11. A compute device, wherein the compute device comprises a memory and at least one processor, the memory is configured to store a group of computer instructions, and when the processor executes the group of computer instructions, operation steps of the method according to any one of claims 1 to 5 are performed.

12. A data transmission system, wherein the data transmission system comprises a data sending apparatus, and the data sending apparatus is configured to perform the data packet transmission method according to any one of claims 1 to 5.

13. A chip, comprising one or more interface circuits and one or more processors, wherein the interface circuit is configured to: receive a signal from a memory of an electronic device, and send the signal to the processor, the signal comprises computer instructions stored in the memory, and when the processor executes the computer instructions, the electronic device is enabled to perform operations of the method according to any one of claims 1 to 5.

14. A computer-readable storage medium, comprising computer software instructions, wherein when the computer software instructions are run on a computer, the computer is enabled to perform operation steps of the method according to any one of claims 1 to 5.

15. A computer program product, wherein the computer program product comprises a software program, and when the software program is executed by a computer or a processor, the computer or the processor is enabled to perform operation steps of the method according to any one of claims 1 to 5.
